# DEMANDE DE BREVET EUROPEEN

(11) **EP 2 450 726 A1**
(43) Date de publication de la demande: **09.05.2012**
(21) Numéro de dépôt: 11187742.9
(22) Date de dépôt: 03.11.2011
(51) Int. Cl.: G02B 6/00, B60Q 1/00, F21V 8/00

(54) **Guide optique pour véhicule à moteur**

(30) Priorité: 04.11.2010 FR 1059090
(71) Demandeur: Valeo Vision, 93012 Bobigny (FR)
(72) Inventeur: Albou, Pierre, 75013 Paris (FR); Goncalves, Whilk, 75013 Paris (FR); Oritz, José, 93260 Les Lilas (FR)

(57) **Abrégé**

La présente invention concerne un guide optique, son utilisation dans un dispositif d'éclairage et/ou de signalisation équipant un véhicule à moteur, en particulier un véhicule automobile et son procédé de fabrication. Elle vise plus particulièrement un guide optique comportant un polymère translucide comprenant des nanoparticules, lesdites nanoparticules permettant une diffusion et/ou une émission de la lumière.

## Description

La présente invention concerne un guide optique, son utilisation dans un dispositif d'éclairage et/ou de signalisation équipant un véhicule à moteur, en particulier un véhicule automobile et son procédé de fabrication.

Dans le domaine de l'éclairage et de la signalisation de véhicules automobiles, il est de plus en plus fréquent d'utiliser des guides optiques. En effet, les guides optiques présentent l'avantage de pouvoir prendre des formes géométriques très variées et d'amener une surface éclairante même dans des zones peu accessibles du dispositif d'éclairage et/ou de signalisation, contribuant ainsi au style du dispositif.

Par guide optique, on vise dans la présente demande une pièce transparente ou translucide à l'intérieur de laquelle des rayons lumineux se propagent de manière contrôlée depuis une des extrémités du guide, appelée « face d'entrée » jusqu'à au moins une face de sortie. La propagation de manière contrôlée s'effectue généralement par des réflexions internes sur diverses faces, appelées faces de réflexion interne.

Concrètement, à proximité de la face d'entrée, est disposée au moins une source lumineuse, par exemple une source lumineuse de petite taille, telle qu'une diode électroluminescente. Les rayons lumineux émis par cette source vont se propager dans le guide optique vers la face opposée à la face d'entrée appelée « face terminale », par l'intermédiaire de faces de réflexion interne, situées entre la face d'entrée et la face terminale.

Dans certains guides de lumière, les faces de réflexion interne peuvent renvoyer la lumière en direction d'une face de sortie autre que la face terminale, de telle manière qu'un observateur a alors l'impression que ladite face de sortie est éclairée et que cette face de sortie correspond à une source lumineuse. Selon certains modes de réalisation, par exemple comme cela est décrit dans la demande FR 2 891 891, cette face de sortie est notamment une des faces de réflexion interne. Dans ce cas, les rayons incidents sur une première face de réflexion interne, sont renvoyés avec un angle d'incidence sur une seconde face de réflexion interne, l'angle d'incidence étant tel, qu'au lieu de se réfléchir sur cette seconde face de réflexion interne, les rayons la traversent et sortent du guide. Par conséquent, seuls les rayons qui ne rencontrent pas la première face de réflexion interne seront réfléchis par cette seconde face de réflexion interne. Ces faces de réflexion interne peuvent être obtenues par la présence de prismes, comme cela est décrit dans la demande FR 2 891 891. De telles guides optiques comportant des prismes permettent d'obtenir l'émission d'une lumière anisotrope et dont l'aspect est homogène sur la face de sortie, lorsque le guide est à l'état allumé.

Toutefois, la réalisation des prismes dans un guide optique est une opération délicate car elle nécessite une grande précision dans la géométrie de ceux-ci. De surcroît, les moules permettant la fabrication de ces guides optiques comportant des prismes vieillissent relativement rapidement.

L'invention concerne donc un guide optique permettant un éclairage homogène et anisotrope par la face de sortie en évitant autant que possible de recourir à des prismes.

Elle vise plus particulièrement un guide optique comportant un polymère translucide comprenant des nanoparticules, lesdites nanoparticules permettant une diffusion et/ou une émission de la lumière.

Le guide optique visé par l'invention est tel que défini ci-avant. En particulier, la définition du guide optique visé par l'invention ne couvre pas les fibres optiques.

Avantageusement, le polymère translucide est transparent. Il peut être coloré ou non.

Le polymère peut être un homopolymère ou un copolymère et il est choisi préférentiellement dans le groupe constitué par les polymères ou copolymères amorphes tels que les polyacryliques, les polyesters les polycarbonates, les polyéthersulfones ou polyset epoxy siloxanes (PES) et les copolymères d'oléfines cycliques (COC).

Par « nanoparticule », on vise une particule microscopique ayant dans un système en trois dimensions, par exemple un système orthonormé, au moins une première de ses trois dimensions de moins de 100nm. De préférence, les nanoparticules mises en oeuvre selon l'invention ont une taille comprise entre 2 et 1000nm, de préférence, entre 2 et 300nm, plus préférentiellement entre 5 et 200nm, bornes incluses. Par « taille », on entend la grandeur des deux autres dimensions de la particule.

Dans un mode de réalisation préférentiel, les nanoparticules ont une forme polyédrique ou sphérique, en particulier polyédrique régulière ou quasi régulière. De préférence, la forme lamelle sera évitée. En effet, lors de leur incorporation dans le polymère, les nanoparticules ayant une forme lamelle, ont généralement tendance à prendre une orientation préférentielle au sein de ce dernier. Dans ce cas, l'homogénéité et l'anisotropie de la lumière résultant de la diffusion seront diminuées. Par « lamelle », on vise une forme dans laquelle une des trois dimensions de la particule est plus de 10 fois plus grande que l'une des deux autres dimensions, préférentiellement 20 fois plus grande.

Les nanoparticules envisagées pour être mises en oeuvre dans l'invention sont de deux types :
- un premier type de nanoparticules permet la diffusion de la lumière par réflexion totale ou partielle des rayons lumineux incidents sur leur surface. Il s'agit de nanoparticules de nature organique, tel que les nanostructures de carbones (par exemple, les sphères de carbone, les nano-diamants, les nanotubes de carbones ou les fullerènes), ou inorganiques, tels que les nanocristaux, en particulier les nanocristaux d'oxydes métalliques. Des exemples appropriés de nanocristaux sont les suivants : Fe₂O₃, Mn₃O₄ et Cu₂O.
- les nanoparticules du deuxième type peuvent, quant à elles, émettre de la lumière suite à leur excitation par un rayon lumineux incident. Il s'agit plus particulièrement des quantum dots. Les quantum dots sont des structures nanométriques de petites tailles (de l'ordre de 2 à 10nm) comportant un noyau semi-conducteur, généralement modifié chimiquement en surface. Le noyau est composé de quelques centaines à quelques dizaines de milliers d'atomes arrangés selon un ordre cristallin. Il s'agit généralement de nanocristaux de type CdSe, ZnS, CdTe, ZnCdSe. La modification chimique en surface peut être organique ou inorganique et vise le plus fréquemment à accroître les propriétés de solubilité avec un solvant ou de compatibilité avec un polymère. A titre d'exemple, de tels quantum dots sont commercialement disponibles sous les marques Qdots® (Invitrogen) et Lumidots™ (Aldrich).

Le polymère translucide du guide optique selon l'invention peut comporter une ou plusieurs espèces de nanoparticules. Par « espèce de nanoparticules », on entend des nanoparticules de même formule chimique présentant une taille et une forme similaire. En particulier, le polymère pourra ne comporter que des nanoparticules du premier type (diffusion), que des nanoparticules du deuxième type (émission) ou un mélange des deux types de nanoparticules. Le choix du type de nanoparticules dépend de l'effet visuel recherché.

La répartition des nanoparticules et en particulier leur densité dans le polymère est contrôlée de manière à obtenir l'effet visuel recherché : homogénité de la lumière diffusée et/ou émise, ou au contraire effet de variation de lumière, tel que par exemple, la présence de zones plus lumineuses dans le guide ou un effet de tronçonnage de la lumière (voir les exemples ci-après). Par ailleurs, d'autres effets visuels, tels que des effets visuels colorés, peuvent être obtenus dans le guide optique grâce à la présence de quantum dots, qui lors de leur excitation, peuvent émettre une longueur d'onde donnée.

Deux modes de réalisation particulièrement avantageux sont proposés afin de contrôler la diffusion et/ou l'émission de lumière par le guide optique selon l'invention. Ces deux modes de réalisation seront plus particulièrement décrits dans le cas où l'on souhaite obtenir des guides optiques, qui, lorsqu'ils sont à l'état allumé, diffusent et/ou émettent une lumière homogène.

Un mode de réalisation met en oeuvre une densité variable de nanoparticules.

Dans le cas où l'on souhaite obtenir une diffusion et/ou émission de lumière homogène sur toute la face de sortie, cette variation de la densité présente la forme d'un gradient de densité, la densité de nanoparticules augmentant dans le polymère composant le guide optique en fonction de l'éloignement de la face d'entrée du guide optique. On obtient ainsi un guide optique permettant une diffusion et/ou une émission constante de la lumière, le gradient de densité permettant d'augmenter la fréquence du nombre de réflexion des rayons lumineux incidents afin de compenser la perte de signal lumineux le long du guide optique.

Dans un autre mode de réalisation, le guide optique comporte un second polymère translucide, de manière à définir deux volumes ayant des caractéristiques de diffusion et/ou d'émission de la lumière, différentes. Le second polymère translucide peut être identique ou différent du premier polymère. Il peut comporter ou non des nanoparticules. Lorsqu'il comporte des nanoparticules, celles-ci sont d'une espèce ou d'une densité différente à celles présentes dans le premier polymère.

Dans le cas où l'on souhaite obtenir une diffusion et/ou émission de lumière homogène sur toute la face de sortie, la proportion de volume présentant les caractéristiques de diffusion et/ou d'émission les plus importantes, va en s'accroissant dans le guide optique à mesure que l'on s'éloigne de la face d'entrée dudit guide optique.

Afin de réaliser certains effets visuels, il est possible d'utiliser plus de deux polymères de manière à définir plus de deux volumes ayant des caractéristiques de diffusion et/ou d'émission de la lumière, différentes. A titre d'exemple, afin d'obtenir l'effet de tronçonnage de lumière divulgué ci-avant, le guide optique peut être composé d'une succession de volumes de polymères, chaque volume de polymère comportant une densité homogène de nanoparticules, ladite densité et/ou l'espèce de nanoparticules étant différente de celles des volumes de polymère voisins, la densité pouvant être nulle à l'occasion.

Le guide optique selon l'invention est préparé à l'aide du procédé de fabrication suivant, comportant les étapes consistant à :
- incorporer des nanoparticules aux monomères, prépolymères ou polymère,
- réaliser ou achever la polymérisation.

Les moyens pour incorporer et disperser une nanoparticule dans un polymère sont multiples, tels que par exemple, la pulvérisation de nanoparticules (en suspension ou à l'état colloïdal) dans de la poudre du polymère à l'intérieur d'un mélangeur et suivie d'une granulation.

Avantageusement, la polymérisation pourra être débutée, avant incorporation des nanoparticules, avec un solvant de façon à travailler dans un milieu de plus en plus visqueux. Quand la viscosité désirée est atteinte, les nanoparticules sont dispersées, par exemple sous agitation. Une augmentation de la température permet ensuite généralement d'achever la polymérisation et d'évaporer le solvant.

Les guides optiques selon l'invention sont particulièrement adaptés pour la fabrication de dispositifs d'éclairage et/ou de signalisation pour automobile. En particulier, les dispositifs d'éclairage et/ou de signalisation pour automobile comportant un guide optique selon l'invention entrent dans le champ de la présente demande.

L'invention sera mieux comprise à la lecture de la description qui va suivre, donnée uniquement à titre d'exemple et faite en se référant aux dessins dans lesquels :
- la figure 1 illustre le principe général de diffusion d'un faisceau lumineux à l'aide de nanoparticules d'un guide optique selon un premier mode de réalisation de l'invention,
- la figure 2 représente schématiquement une vue en coupe transversale du guide optique de la figure 1,
- la figure 3 représente schématiquement une vue en coupe longitudinale d'un guide optique selon un deuxième mode de réalisation de l'invention,
- la figure 4 représente schématiquement une vue selon un premier plan de coupe transversale A-A' du guide de la figure 3,
- la figure 5 représente schématiquement une vue selon un deuxième plan de coupe transversale B-B' du guide de la figure 3,
- la figure 6 représente schématiquement une vue en coupe longitudinale d'un guide optique selon un troisième mode de réalisation de l'invention,
- les figures 7 et 8 représentent des vues analogues à celles des figures 4 et 5 du guide de la figure 6 selon les plans de coupes transversaux C-C' et D-D',
- la figure 9 représente schématiquement un guide optique selon un quatrième mode de réalisation de l'invention,
- la figure 10 représente schématiquement un guide optique selon un cinquième mode de réalisation de l'invention.

Dans ce qui suit, la direction longitudinale est la direction que suivrait un rayon lumineux non dévié entrant dans le guide par la face d'entrée et sortant par la face terminale, sensiblement perpendiculairement à celles-ci.

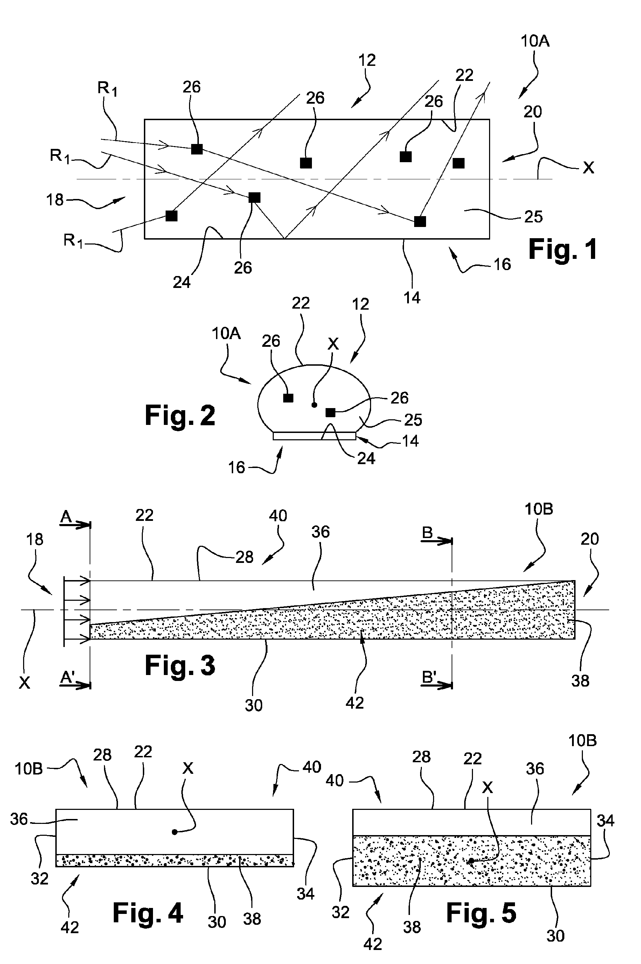

On a représenté sur les figures 1 et 2, un guide optique selon un premier mode de réalisation de l'invention et désigné par la référence générale 10A. Le guide optique 10A présente une forme générale de révolution autour d'un axe X, parallèle à la direction longitudinale. En l'espèce, le guide 10A présente une forme générale cylindrique sur au moins une portion angulaire 12 autour de l'axe X et un méplat 14 sur une portion angulaire complémentaire 16 de la portion 12. Le guide 10A comprend une face d'entrée 18 de rayons lumineux Ri et une face terminale 20, opposée à la face d'entrée 18. Le guide 10A comprend une face de sortie 22 des rayons lumineux Ri définie par la portion angulaire 12. Le guide 10A comprend une face de réflexion interne 24 (par exemple un revêtement) définie par la portion angulaire 16 et permettant de renvoyer les rayons lumineux dans le guide optique. Le guide 10A est composé d'un polymère transparent 25 tel que du polycarbonate, dans lequel sont dispersées avec une densité homogène des nanoparticules 26, par exemple, des nanocristaux d'oxyde de métal. Les nanoparticules 26 présentent une forme générale polyédrique, par exemple cubo-octaédrique, délimitant plusieurs surfaces de réflexion, constituant des faces de réflexion internes autres que celles du guide, dites nanosurfaces de réflexion, sur lesquelles un rayon lumineux incident Ri est susceptible de se réfléchir.

Nous allons maintenant décrire un procédé de fabrication du guide selon un premier mode de réalisation. Dans un mélangeur, on incorpore par pulvérisation les nanoparticules 26 au polymère transparent 25 sous forme de poudre. On effectue la granulation puis on initie la polymérisation du polymère 25. En variante, la polymérisation du polymère 25 est initiée avant incorporation des nanoparticules 26 et achevé après incorporation.

On a représenté sur les figures 3 à 5, un guide 10B selon un deuxième mode de réalisation de l'invention. Les éléments analogues à ceux représentés sur les figures précédentes sont désignés par des références identiques.

A la différence du guide selon le premier mode de réalisation, le guide 10B présente une forme générale parallélépipédique dont la plus grande dimension est sensiblement parallèle à la direction longitudinale. Le guide 10B comprend 6 faces : la face d'entrée 18, la face terminale 20, deux grandes faces opposées 28, 30 sensiblement parallèles à la direction longitudinale et deux petites faces opposées 32, 34, sensiblement parallèles à la direction longitudinale et perpendiculaires aux deux grandes faces 28, 30.

Le guide 10B comprend des premier et deuxième polymères 36, 38 définissant respectivement des premier et deuxième volumes 40, 42. Les premier et deuxième polymères 36, 38 sont de même nature, par exemple, en polyester. En variante, ils sont de natures différentes. Le premier polymère 36 ne comprend pas de nanoparticules 26 tandis que le deuxième polymère 38 comporte une densité uniforme de nanoparticules 26.

En variante, les polymères 36, 38 comportent tous deux des nanoparticules 26, d'espèce et/ou de densité différentes.

La face 28 constitue la face de sortie analogue à la face de sortie 22 du premier mode de réalisation. De même, les faces 30, 32, 34 constituent les faces de réflexion, analogues à la face de réflexion 24 du premier mode de réalisation.

En référence aux figures 4 et 5, dans un plan de coupe transversale perpendiculaire à la direction longitudinale, l'aire de la section du volume 40 défini par le premier polymère 36, décroît lorsque l'on se déplace de la face d'entrée 18 vers la face terminale 20. A l'inverse, dans le même plan de coupe transversale, l'aire de la section du volume 42 défini par le deuxième polymère 38, croît lorsque l'on se déplace de la face d'entrée 18 vers la face terminale 20.

En l'espèce, le volume 40 a une forme générale de rampe inversée dont la section transversale est décroissante lorsque l'on se déplace de la face d'entrée 18 vers la face terminale 20. A l'inverse, le volume 42 a une forme générale de rampe dont la section transversale est croissante lorsque l'on se déplace de la face d'entrée 18 vers la face terminale 20.

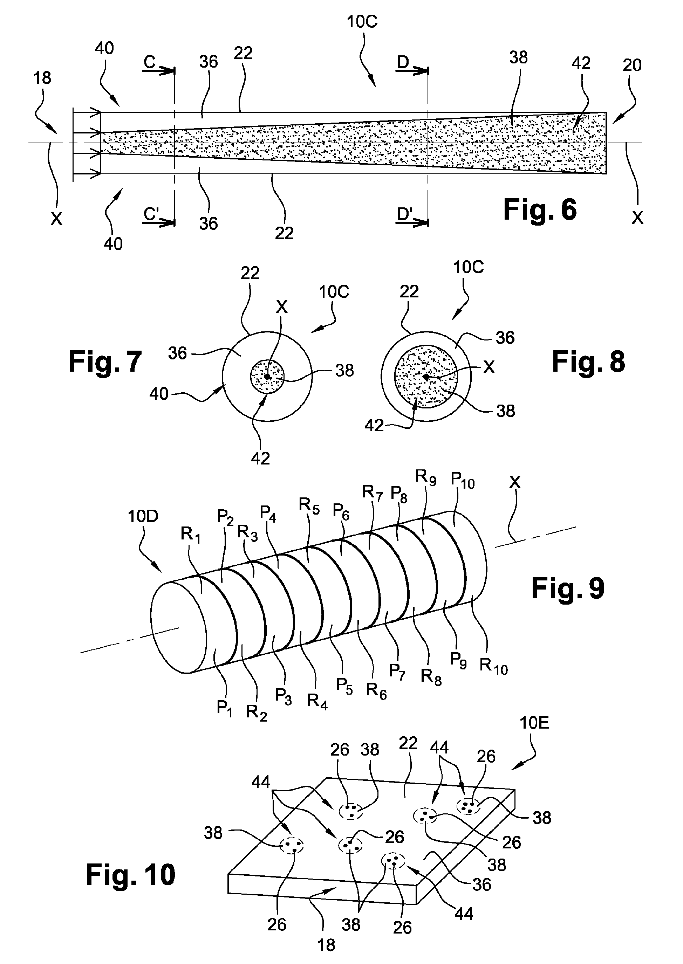

On a représenté sur les figures 6 à 8, un guide 10C selon un troisième mode de réalisation de l'invention. Les éléments analogues à ceux représentés sur les figures précédentes sont désignés par des références identiques.

A la différence du guide selon le deuxième mode de réalisation, le guide 10C présente une forme générale de révolution, en particulier cylindrique, autour de l'axe X. Le guide 10 ne présente pas de face de réflexion 24 et en particulier, sa face périphérique de sortie 22 présente une forme générale cylindrique. En effet, on utilise le guide selon ce troisième mode de réalisation pour observer la lumière diffusée et/ou émise sur toute la surface périphérique 22.

En référence aux figures 7 et 8, dans un plan de coupe transversale perpendiculaire à la direction longitudinale, le volume 42 a une forme générale tronconique autour d'un axe de révolution confondu avec l'axe X dont la section transversale est croissante lorsque l'on se déplace de la face d'entrée 18 vers la face terminale 20. Le volume 40 constitue le volume complémentaire du guide optique 10C.

On a représenté sur la figure 9, un guide 10D selon un quatrième mode de réalisation de l'invention, présentant un effet visuel de tronçonnage. Les éléments analogues à ceux représentés sur les figures précédentes sont désignés par des références identiques.

A la différence du troisième mode de réalisation, le guide 10D comprend une pluralité de polymères Pi, comportant des densités et/ou des espèces de nanoparticules 26 différentes. Chaque polymère Pi définit un tronçon ou rondelle Ri. Les rondelles Ri sont accolées les unes aux autres formant ainsi le guide 10D.

On a représenté sur la figure 10, un guide 10E selon un cinquième mode de réalisation de l'invention, présentant un effet visuel de zones lumineuses. Les éléments analogues à ceux représentés sur les figures précédentes sont désignés par des références identiques.

De manière analogue au deuxième mode de réalisation, le guide 10E présente une forme généralement parallélépipédique, avec une face d'entrée 18 et une face de sortie 22. A la différence du deuxième mode de réalisation, le guide 10E comprend un polymère 36 et des zones 44 comportant des nanoparticules 26. Ces zones 44 sont des inclusion dans le polymère 36 d'un second polymère 38 comportant des nanoparticules 26. En variante, le guide 10E comprend un unique polymère 46 comprenant des zones 44 ponctuelles de forte densité en nanoparticules 26.

L'invention ne se limite pas aux modes de réalisation précédemment décrits.

## Revendications

1. Guide optique comportant un polymère translucide comprenant des nanoparticules, lesdites nanoparticules permettant une diffusion et/ou une émission de la lumière.

2. Guide optique selon la revendication 1, dans lequel les nanoparticules ont une taille comprise entre 2 et 1000nm, bornes incluses.

3. Guide optique selon la revendication 1 ou 2, dans lequel les nanoparticules permettent la diffusion de la lumière par réflexion totale ou partielle des rayons lumineux incidents sur leur surface.

4. Guide optique selon l'une quelconque des revendications 1 à 3, dans lequel les nanoparticules, notamment des quantum dot, émettent de la lumière suite à leur excitation par un rayon lumineux incident.

5. Guide optique selon l'une quelconque des revendications 1 à 4, dans lequel les nanoparticules ont une forme polyédrique ou sphérique.

6. Guide optique selon l'une quelconque des revendications 1 à 5, dans lequel les nanoparticules sont de nature organique et/ou inorganique.

7. Guide optique selon l'une quelconque des revendications 1 à 6, dans lequel la densité des nanoparticules dans le polymère est variable.

8. Guide optique selon l'une quelconque des revendications 1 à 7, dans lequel la densité des nanoparticules dans le polymère est homogène.

9. Guide optique selon l'une quelconque des revendications 1 à 8, comportant au moins un second polymère translucide, de manière à définir deux volumes ayant des caractéristiques de diffusion et/ou d'émission de la lumière différentes.

10. Procédé de fabrication d'un guide optique selon l'une quelconque des revendications 1 à 9, comportant les étapes consistant à :
- incorporer des nanoparticules aux monomères, prépolymères ou polymère,
- réaliser ou achever la polymérisation.

11. Dispositif d'éclairage et/ou de signalisation pour automobile comportant un guide optique selon l'une quelconque des revendications 1 à 9.

12. Utilisation des guides optiques selon l'une quelconque des revendications 1 à 9, pour la fabrication de dispositif d'éclairage et/ou de signalisation pour véhicule à moteur.
